# EUROPEAN PATENT SPECIFICATION

(11) **EP 0 686 245 B1**
(45) Date of publication and mention of the grant of the patent: **14.06.2000**
(21) Application number: 95919249.3
(22) Date of filing: 15.12.1994
(51) Int. Cl.: F16L 21/03

(54) **A SEALING DEVICE, A MOULD ELEMENT AND A PIPE**
ABDICHTUNG, FORMTEIL UND EIN ROHR
DISPOSITIF D'ETANCHEITE, ELEMENT DE MOULAGE ET CONDUIT

(30) Priority: 15.12.1993 DE 9319230 U; 11.07.1994 SE 9402443
(43) Date of publication of application: 13.12.1995
(73) Proprietor: Forsheda AB, S-330 12 Forsheda (SE)
(72) Inventor: NEUMANN, Wieland, D-4050 Mönchengladbach (DE); MEHL, Helmut, D-6290 Weilburg (DE); EKHOLM, Kenneth, S-330 12 Forsheda (SE)
(74) Representative: Linde, Leif
(86) International application number: SE9401209
(87) International publication number: WO9516872

(56) References cited:
- DE-A- 2 935 392
- DE-A- 4 108 107
- DE-U- 9 201 544
- SE-B- 412 797
- SE-B- 444 357
- SE-B- 463 664

## Description

The present invention relates to a sealing device for sealing an annular space between two pipe end portions preferably consisting of concrete, one of the pipe end portions forming a socket formed with a substantially cylindrical inner surface and the other pipe end portion forming a spigot end introducable into the socket and formed with a substantially cylindrical outer surface. The invention relates also to a pipe preferably consisting of concrete and having a socket with a sealing device provided at a substantially cylindrical inner surface thereof.

The sealing device according to the invention is of the kind comprising a sealing ring consisting of an elastic material, preferably rubber, having a sealing portion for sealing the annular space, the sealing portion comprising a radially inwardly directed sealing projection, the sealing device being adapted to be moulded into the socket at the cylindrical inner surface thereof and having means for anchoring the sealing device in the moulded-in position in the socket. The sealing device further comprises a mould ring connected with the sealing ring and adapted to be moulded into the socket together with the sealing ring with the sealing ring positioned adjacent the free end of the socket and the mould ring positioned at a greater distance from the free end of the socket than the sealing ring, the mould ring being at least in connection with the sealing portion of the sealing ring easily compressible so as to take up the sealing deformation of the sealing portion when the spigot end is introduced into the socket. The sealing projection has a surface facing an end surface of a connection portion of the mould ring.

Many different sealing devices of this kind are previously known. However, the previously known sealing devices have drawbacks of different kinds, for example with regard to the design of the connection between the sealing ring and the mould ring positioned axially inside the sealing ring. Thus, the connection is either complicated and costly to provide or the connection is insufficient with regard to its object of fixing the sealing ring in relation to the mould ring during the moulding operation. A further drawback of previously known sealing devices is that the connection between the sealing ring and the mould ring prevents or deteriorates the correct function of the sealing ring with regard to the pattern of deformation of the sealing ring, the desired lip function of the sealing portion of the sealing ring and so on in the case that the mould ring is left in the socket when the annular space is provided.

In a previously known sealing device of said kind (DE-A-29 35 392) the connection portion of the sealing ring is of cylindrical shape and terminates in a radial end surface extending perpendicular through the inner surface of the concrete pipe socket. A mould ring is positioned at the inner surface of the connection portion and the sealing portion. Preferably the mould ring consists of polystyrene and is usually removed before the concrete pipes are jointed. At the front end of the sealing ring (seen in the direction of introduction of the spigot end) there is a radially extending retainer portion having a thickened end portion, which is moulded into the concrete and has the object of anchoring the sealing ring. During the manufacturing of the concrete pipe the sealing device consisting of the sealing ring and the mould ring is supported by the mould element (the so called base ring). The mould comprises also an outer mould element and a core between which the concrete is moulded and compacted. The compacting is usually provided by vibrating the core and the vibrations thus generated are transmitted to the base ring and to the concrete. As a consequence of the vibrations there is established a tendency to the collection of liquid constituents at the interfaces and at these places it is also possible that there are formed air bubbles which remain at the interfaces. This risk is present especially with regard to the area below the radially extending retainer portion where air, water or oil (release agent for the mould) can collect leading to bubble formation in the concrete of the pipes. This risk of bubble formation is present, even to less extent, in the concrete area at the outer surface of the connection portion. Finally the vibration operation can cause that the mould ring is released form the base ring and floats up in the concrete leading to a cassation of the concrete pipes.

In an other previously known sealing device (DE-A-33 40 569) the mould ring is formed as a projecting collar on the sealing ring, the collar being directly connected with the lip sealing portion of the sealing ring. The sealing ring has a retainer portion which as seen in the direction of introduction of the spigot end, is positioned in front of the compression or lip sealing portion of the ring and is of dovetail shape. This provides for a good anchoring in the concrete if there is not collected air bubbles, water and oil at the lower side of the retainer portion which might lead to bubble forming. The projecting collar of the previously known sealing device consists of the same material as the sealing ring and contains support elements having the same strength as the sealing ring. Thereby, the deformation of the sealing portion and the possibility of adjusting the positions of the spigot ends of the pipes will be substantially reduced.

In a further previously known sealing device (DE 41 08 851) the mould ring is formed as a projecting collar on the seal and the mould ring comprises channels arranged in several rows. Radially extending anchorage means having dovetail shape cross sections are arranged on the sealing ring and provide for a good enclosure in the concrete if there has not been collected air bubbles, water and releasing oil at the lower side thereof.

DE-A-4 108 107 shows and describes a sealing ring comprising a sealing portion and a retainer portion. The sealing portion and the retainer portion have their radially outer surfaces positioned in the same cylindrical plane which means that the sealing portion can "float out" in the direction of the retainer portion if the socket and the spigot are subjected to transversely directed forces of different magnitudes.

DE-U-9 201 544 shows and describes a sealing ring comprising a sealing portion and a retainer portion which is weak in relation to the sealing portion. The radially outer surfaces of the sealing portion and the retainer portion are positioned in the same cylindrical plane which means that the sealing portion can "float out" in the direction of the retainer portion.

The object of the invention is to provide a sealing device of the kind mentioned above lacking the above drawbacks.

In order to comply with this object the sealing device according to the invention is characterized in that the mould ring has at least in connection with the sealing ring its radially outer surface positioned in substantially the same axial plane as the base of the sealing projection, that the sealing projection is of substantially the same radial extension as the opposite end surface of the mould ring and that the sealing ring with the exception of the sealing projection is depressed and enclosed in the socket after the sealing device has been moulded into the socket.

According to the present invention a substantial part of the sealing ring is moulded into or "chambered" in the concrete of the socket. Thus, the sealing ring has a part which radially projects into the concrete material of the socket providing a part of the sealing ring which is at three sides enclosed by the concrete, and this feature prevents the sealing ring from floating out into the axial direction which in turn provides for a stable concentric position between the socket and the spigot.

In a preferred embodiment of the invention the sealing ring and the mould ring are connected with each other by means of two concentric annular connection portions engaging each other, one of the connection portions being formed at the inner edge of the sealing ring and the other being formed at the outer edge of the mould ring.

A connection between the sealing ring and the mould ring formed in this way is simple and efficient with regard to its function of holding together the sealing ring and the mould ring during the moulding operation at the same time as it allows that the sealing ring acts in a correct way from the functional point of view in order to maintain its sealing function after the forming of the annular space between the socket and the spigot end introduced therein.

In accordance with the invention it is preferred that the mould ring consists of cellular rubber or cellular plastic of elastic type. The cellular plastic of elastic type can be constituted by polyurethane or polyester.

The sealing portion has a radially inwardly directed sealing projection having a surface facing an end surface of the connection portion of the sealing ring, said surface being of substantially the same radial extension as the opposite end surface of the mould ring. Thereby, it is suitable that the end surface of the connection portion of the mould ring and the corresponding surface of the sealing projection engage each other at the radially inner surface of the sealing device and for the rest constitute a space which is either uniform or widens radially outwards.

Preferably the connection portions of the sealing ring and the mould ring engage each other by means of surfaces adapted to prevent axial displacement of the sealing ring and the mould ring in relation to each other. For example, this can be provided by forming the connection portion of the mould ring with a radially outwardly directed annular projection engaging a complementary groove in the connection portion of the sealing ring. Thereby, the complementary groove in the connection portion of the sealing ring has the function not only of preventing axial displacement of the sealing ring and the mould ring in relation to each other but also to provide a space which can receive the material of the sealing ring at the deformation of the sealing ring accompanying the introduction of a spigot end into the socket in which the sealing device according to the invention is arranged in a moulded-in-position.

At its radially outer portion which is adapted to be moulded into the socket the sealing ring is formed so as to improve the connection with the socket. This can be provided by means of retainer portions and/or surfaces, grooves and the like formed in a suitable way.

In a preferred embodiment of the invention the sealing ring is anchored in the concrete by the fact that it is wedge shaped and more precisely the rear, annular, projecting surface of the connection portion is formed as an undercut anchorage surface which at the manufacturing of the concrete pipes extends upwardly so that air bubbles, water and oil in this area of the anchorage surface are easily forced away by the heavier concrete. The undercut anchorage surface is arranged in an acute angle to the peripheral socket surface of the concrete and is thereby well secured against radial displacement of the sealing ring.

When using a special light mould ring it is important that the mould ring does not float upwards. This risk is present especially in the case that concrete sludge arrives to the lower side of the mould ring through a gap when the concrete pipes are being manufactured. In order to prevent this a sealing bead is arranged in the area of the place where the anchorage surface extends through the inner surface of the concrete socket, the bead consisting of the same material as the sealing ring and thus being well adapted for providing a sealing effect. If the sealing bead is lengthened it can also form a projecting collar extending up to the radially extending bottom surface of the socket and completely or partly covering this surface. By contrast with the condition at previously known, projecting collars there is in accordance with the invention formed a wedge shaped projection in the concrete engaging the undercut anchorage surface and securely anchoring the socket seal.

In order to provide a sufficiently large receiving space for the sealing portion and space of movements for the spigot end it is advantageous if the projecting collar has a support layer of sufficient thickness. This support layer can consist of cellular material or can be formed with radially and/or obliquely directed projections. In order to take up the larger pressures appearing at larger pipes the projecting collar can have a curved outer side. Thereby, the pressure from the liquid concrete will be taken up in a favourable way while the space of movement for the spigot end at the subsequent jointing of the concrete pipes will not be too much restricted as the projecting collar is from the inside soft to a certain degree.

By choosing different materials and material thicknesses of the different portions of the sealing device it is possible to control the resiliency thereof so that the good movability of the spigot end is connected with sufficient support for the projecting collar when the concrete pipes are being manufactured. It is especially possible to provide that the resiliency is highest in the connection area between the sealing ring and the mould ring.

In order to provide a sufficiently large, undercut anchorage surface the main portion of the sealing ring is formed substantially as an annular cone. When manufacturing the concrete pipes this outer cone surface is obliquely directed with some undercut, the heavy, liquid concrete thereby forcing away the air bubbles, the water and the oil when the concrete is moulded into the mould, so that the risk of formation of bubbles at the rear side of the sealing device is obviated. The size of the outer surface of the sealing device can be further increased by providing this surface with projections and grooves. If the projections and the grooves extend obliquely upwards when the concrete pipes are manufactured small air bubbles can in a satisfactory way be displaced upwards together with water and oil, especially in the case that the grooves have increasing radial size in the upward direction. The projections and the grooves contribute to an improved bond between the outer surface of the sealing device and the concrete when the sealing device is moulded into the socket.

An undercut can be arranged in the compression or lip sealing area of the sealing ring. This undercut space can be used for fastening the mould ring which for this purpose is provided with a fastening projection. The undercut space can also be formed so that the sealing lip is supported when being deflected to a substantial degree which obviates the risk of withdrawal of the sealing lip and that the sealing lip is teared off.

The invention also comprises a pipe provided with a socket having at its inner surface a sealing device according to the invention.

Different embodiments of the sealing device and the pipe according to the invention shall be described in the following with reference to the accompanying drawings.

Fig. 1 is an axial section of an embodiment of a sealing device according to the invention, the sealing device being positioned in a mould for moulding a concrete pipe while moulding the sealing device into the socket of the concrete pipe.

Figs. 2 - 8 are axial sections of different embodiments of sealing devices according to the invention.

Fig. 9 is an axial section of a pipe socket having a sealing device according to Fig. 8 moulded into the socket.

Figs. 10 - 13 are axial sections of further embodiments of sealing devices according to the invention.

Figs. 14 - 20 are axial sections of different embodiments of sealing devices according to the invention positioned on base rings, the sealing devices including fastening means for defining the position and releasably fastening the sealing devices on the base rings while the sealing devices are being moulded into pipe sockets.

Fig. 21 is an axial section of a sealing device corresponding to the sections of Figs. 14 - 20, the sealing device being positioned on a base ring.

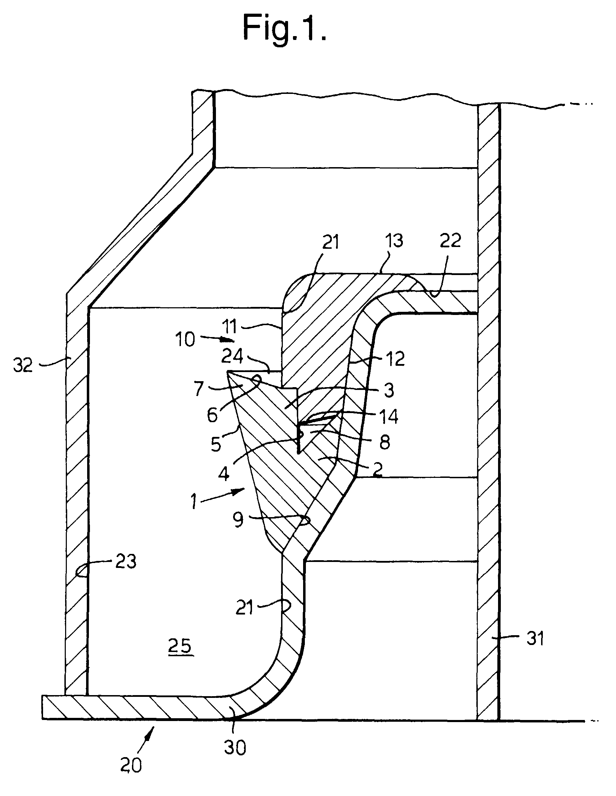

In the embodiment according to Fig. 1 the sealing device according to the invention comprises two portions, i.e. the device comprises an actual sealing ring 1 and a releasable mould ring 10 of cellular rubber or another material which is favourable with regard to its price, for example corrugated card board. In the case that no greater movability of the spigot end is necessary when jointing the concrete pipes the mould ring 10 can remain in place in the socket. The mould ring 10 has an outer surface 11, an inner surface 12, an inner end surface 13 and an outer end surface 14.

The sealing ring has a compression or lip sealing portion 2 and an annular connection portion 3 having an inner surface 4, an outer surface 5 and (seen in the direction of introduction of the spigot end) an inner end surface 6. The radially outer surface 5 of the sealing ring is conical with increasing diameter in direction of the introduction of the spigot end or axially inwards. Thereby the annular connection portion 3 obtains sufficient thickness for providing the inner surface 6 with sufficient width. In addition thereto the inner surface 6 is formed with an undercut, i.e. the inner surface 6 partially covers the mould ring 10. The surfaces 5 and 6 connect with each other at an acute angle and thus, the surfaces form an annular wedge 7. Between the lip 2 and the annular connection portion 3 there is provided an undercut space 8. The inner, front side 9 of the seal extends obliquely in relation to the lip 2.

The socket 20 has an inner surface 21 in which the sealing device is enclosed and further presents an inner bottom surface 22 in the socket and an outer surface 23. Between the inner surface 21 and the undercut, inner end surface 6 there is formed a wedge-shaped concrete portion 24, which makes sure that the sealing ring 1 can not be drawn radially inwardly. Thus, the undercut, inner end surface 6 substantially forms the anchorage surface of the sealing ring 1.

In Fig. 1 there is also indicated a mould for manufacturing the socket. The mould comprises a so called base ring 30, a pipe-shaped core 31 and an outer mould 32. The manufacturing of the concrete pipe is conducted so that the mould is in an upright position filled with concrete mix which thus is filled from the area 25 upwards and displaces the air from the mould space. As appears from the drawing there are no pockets in which the air can be trapped. By vibrating the core 31 the concrete mass is subjected to vibrations making the air bubbles to move upwardly and leave the concrete mix. Such raising air bubbles are not trapped in any place, for which reason the risk of bubble formation in the final product is to a large extent prevented.

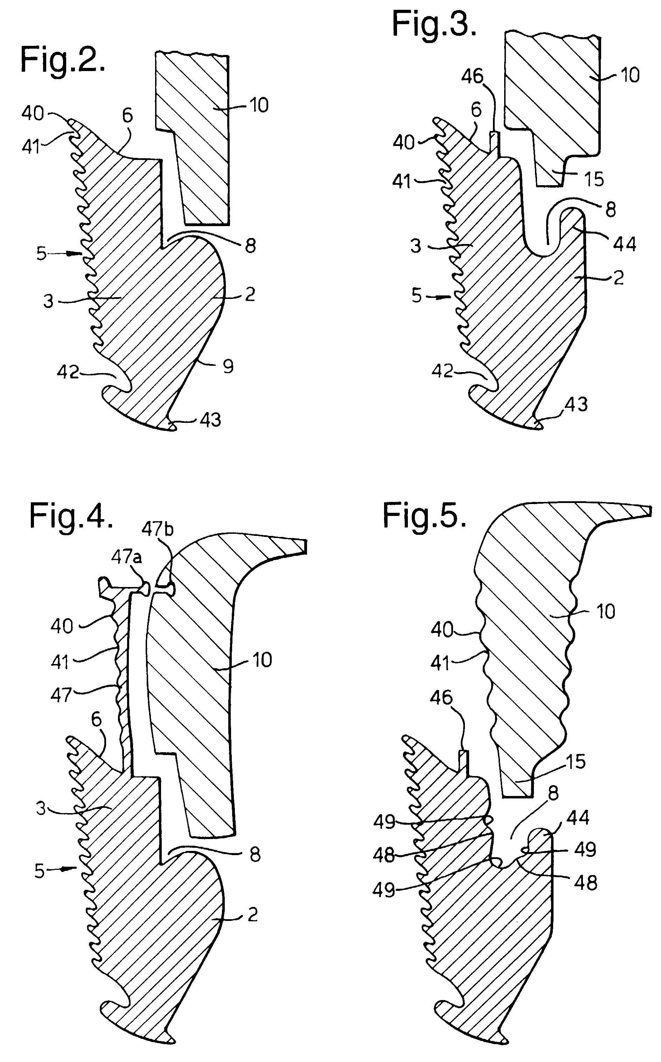

Fig. 2 shows a modification of the sealing ring 1 of the sealing device. The outer surface 5 is provided with projections 40 and grooves 41 which to a substantial degree increase the outer surface.

The projections 40 and the grooves 41 are arranged in an oblique position, i.e. they are directed radially outwardly and axially inwardly for making it possible for the air bubbles in the concrete mass to raise freely when the vibration takes place. For this purpose the grooves 41 can widen radially outwardly. The radial, outer surface 5 can also be provided with a recess 42 also extending obliquely and widening outwardly so as not to prevent the air bubbles from moving upwardly. At the radially outer surface 5 there can also be provided anchorage means (not shown) extending outside the plane of the surface 5 into the concrete and obliquely directed according to said principles in order to improve the waste of air bubbles.

In order to seal the space between the base ring 30 and the sealing ring 1, this is provided with a small lip 43 which is tensioned on the base ring 30 and thus seals the space.

The sealing portion 2 of the sealing ring 1 can also be formed as a compression portion (without a pointed lip), as shown in Fig. 2.

Fig. 3 shows a further embodiment of the sealing device in which the portion 2 is lengthened by a bead 44 so that there is obtained a sufficiently large undercut recess 8 into which a projecting retainer portion 15 of the mould ring 10 can engage.

There is also provided a sealing bead 46 (Fig. 3) in the area of the place where the anchorage surface 6 extends into the inner surface 21 (Fig. 1) of the concrete socket which when the sealing device is being moulded into the concrete socket 20 prevents introduction of concrete sludge between the sealing ring 1 and the mould ring 10.

As shown in Fig. 4 this sealing bead can be lengthened and be designed as a projecting collar 47. This projecting collar can also be provided with projections 40 and grooves 41. There can also be provided an insertion connection 47a, 47b between the collar 47 and the mould ring 10 so as to fasten the collar to the mould ring during the moulding operation.

Fig. 5 shows a special design of the recess 8 and more precisely this is in accordance therewith formed as a wedge-shaped space having wave-shaped limiting surfaces. When bending the bead 44 the crests of the waves 48 engage the troughs of the waves 49 so that the bead 44 is to a certain degree provided with protection from being torn away. Also the inner surface of the mould ring 10 can in the same way be wave-shaped so as to facilitate the introduction of the spigot end.

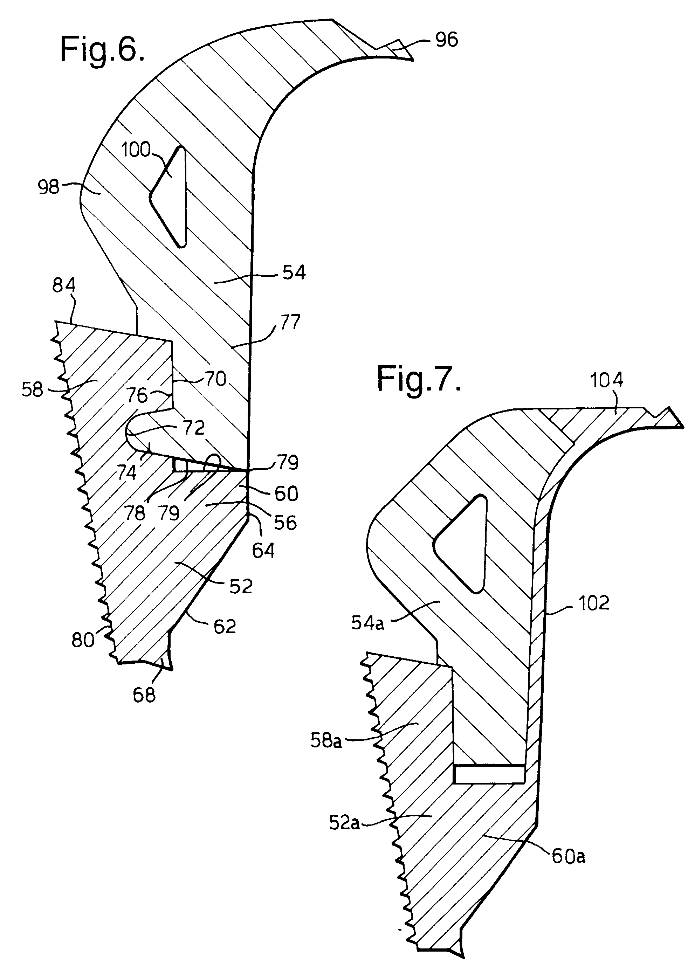

The embodiment of the sealing ring shown in Fig. 6 comprises a sealing ring 52 consisting of rubber and a mould ring 54 connected therewith and consisting of cellular rubber or another material which is soft in relation to the rubber material of the sealing ring 52. Thus, also the mould ring 54 can consist of cellular plastic of an elastic type, for example polyurethane or polyester.

The sealing ring 52 has a sealing portion 56 and a connection portion 58. The sealing portion 56 has a radially inwardly directed, annular sealing projection 60 having a front conical surface 62, an inner, cylindrical surface 64 and a rear, annular, radially directed surface 66. At its front end the sealing portion 56 has an annular, pointed projection 68 which at the front edge of the sealing device provides for a tight connection of the sealing device to a base ring on which the sealing device is placed as an introduction to the moulding of the sealing device into the pipe socket.

The connection portion 58 of the sealing ring 52 has an annular groove 72 at its radially inner surface 70. This groove 72 receives a complementary projection 74 at the radially outer surface 76 of connection portion 77 provided on the mould ring 54. The groove 72 and the projection 74 of the connection portions 58 and 77 provide for a positioning of the sealing ring 52 in relation to the mould ring 54 in the axial direction.

The outer end surface 78 of the mould ring 54 has its main portion positioned at some distance from the annular surface 66 of the sealing projection 60 providing a small space between the surfaces 78 and 66. At its radially inner edge the end surface 78 has an edge portion 79 engaging the surface 66 of the sealing projection 60. In the position shown in Fig. 6 the space is closed at its radially inner as well as at its radially outer edge.

The radially outer surface of the sealing ring 52 has a substantially conical surface portion 80 widening from the axially outer end of the sealing ring 52. The conical surface portion 80 and the conical surface 12 of the sealing projection 10 are related so in relation to each other that the sealing portion 56 has increasing thickness from the axially outer edge.

The sealing ring 52 has an axially inner end surface 84 which is inclined in relation to the axis of the sealing device and forms as a whole a conical surface. As a consequence thereof the inner end surface 84 as well as the inner surface 6 will in the embodiments according to Figs. 1 - 5 be formed with an undercut so that it partially covers the mould ring 54. As is the case in the embodiments according to Figs. 1 - 5 this provides that the sealing ring 52 can not be drawn inwardly. Thus, the undercut, inner end surface 84 forms the main anchorage surface of the sealing ring 54.

The conical surface portion 80 at the radially outer surface of the sealing ring 52 is formed with several parallel peripheral beads 94. The beads 94 act for improving the connection between the sealing device and the concrete material of the socket when moulding the sealing device into the socket by preventing the collection of air bubbles and other irregularities at the interfaces between the concrete and the sealing device.

At its axially inner end the mould ring 54 has an annular, pointed projection 96 corresponding to the projections 68 and having like this the object of preventing penetration of concrete between the sealing device and the base ring on which the sealing device is placed when the sealing device is being moulded into the socket.

As mentioned, the sealing device is moulded into the socket by being in a conventional way tensioned onto the base ring forming a part of a mould for moulding the socket of the concrete pipe and subsequent moulding of concrete into the mould, the sealing device being thereby moulded into the socket of the concrete pipe at the cylindrical inner surface of the socket. In order to reduce the risk for displacement of the sealing ring 52 of the sealing device from correct position on the base ring when the concrete is moulded into the mould as a consequence of the fact that the concrete hits the axially inner end surface 84 of the sealing ring 52 the mould ring 54 is at its inner surface formed with an annular, outwardly directed projection 98. The projection 98 which is of rounded shape guides the concrete outside the end surface 84 of the sealing ring when the concrete is supplied to the mould which reduces the risk of displacement of the sealing ring 52 from the correct position.

In order to reduce the material thickness and reduce the stiffness of the mould ring 54 this is on the same height as the projection 98 provided with an annular recess 100.

Like the embodiment according to Fig. 6 the embodiment of this sealing device according to the invention shown in Fig. 7 comprises a sealing ring 52a and a mould ring 54a. The embodiment according to Fig. 7 differs from the embodiment according to Fig. 6 by the fact the mould ring 54a is connected with the sealing ring 52a by being received in a pocket formed by the sealing ring and defined by the connection portion 58a, the sealing portion 60a, a flap 102 connected with the sealing portion 60a and a thickened end portion 104 formed on the flap. Thus, the end portion 104 is manufactured from the same elastic material as the sealing ring 52a and forms after the sealing has been moulded into the socket a shock absorber between the spigot end introduced into the socket and the bottom surface of the socket.

Because of the fact that the mould ring 54a is positioned in a pocket in the sealing ring 52a the connection between the sealing ring and the mould ring, provided by means of the groove 72 and the projection 74 can be omitted in the embodiment according to Fig. 7.

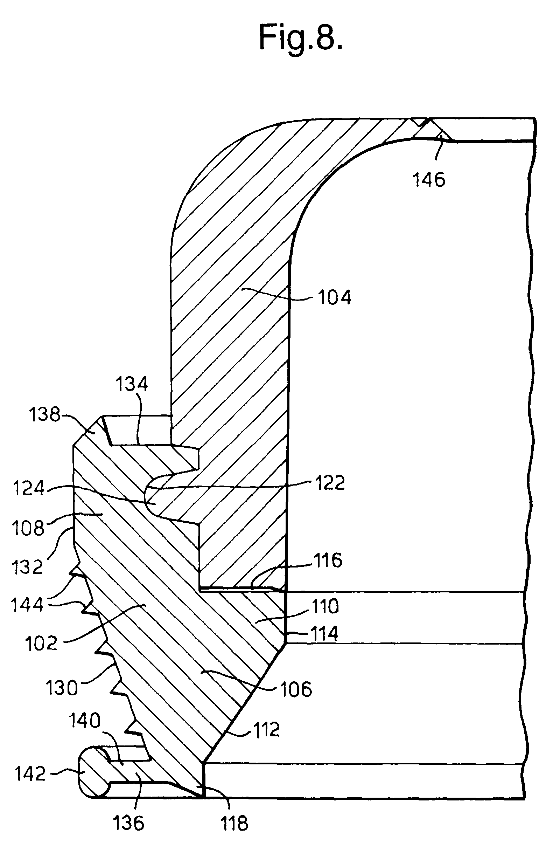

Also the embodiment of the sealing ring according to the invention shown in Fig. 8 comprises a sealing ring 102 consisting of rubber and a mould ring 104 connected therewith, the mould ring consisting of cellular rubber or another material which is softer than the rubber material of the sealing ring 102. Thus, also the mould ring 104 can consist of cellular plastic of the elastic type, for example polyurethane or polyester.

The sealing ring 102 has a sealing portion 106 and a connection portion 108. The sealing portion 106 has a radially inwardly directed, annular sealing projection 110 which like the sealing projection in the embodiment according to Fig. 6 has a front conical surface 112, an inner, cylindrical surface 114 and a rear, annular, radially directed surface 116. Also here the sealing portion 106 has an annular, pointed projection 118 for providing a tight connection with a base ring. The sealing ring 102 and the mould ring 104 are connected with each other by means of an annular groove 122 and a complementary projection 124.

The radially outer surface of the sealing ring 102 has a substantially conical surface portion 130 widening from the axially outer end of the sealing ring 102. A cylindrical surface portion 132 connects with the conical surface portion 130 and forms the outer surface of the connection portion 108 of the sealing ring 102.

The sealing ring 102 has an axially inner end surface 134 which is substantially perpendicular to the axis of the sealing device.

At its radially outer side the sealing ring 102 has two retainer portions 136 and 138 positioned at one end edge each of the sealing ring. The retainer portion 136 is constituted by a radially directed projection positioned at the axially front end of the sealing ring 102 and having a web portion 140 and a thickened portion 142 at its outer, free edge. The retainer portion 138 is constituted by an annular projection axially projecting at the end surface 134 of the sealing ring 102 and being pointed at its free end. The retainer portions 136 and 138 contribute to a secure retaining of the sealing ring in the socket after the sealing device has been moulded into the socket, especially when the sealing ring is subjected to the forces created when introducing the spigot end into the socket.

Like in the embodiment according to Fig. 6 a sealing ring is in the embodiment according to Fig. 8 at its conical surface portion 130 provided with several parallel annular beads 144.

At its axially inner end the mould ring 104 has an annular pointed projection 146 for preventing introduction of concrete between the sealing device and the base ring on which the sealing device is positioned while the sealing device is being moulded into the socket.

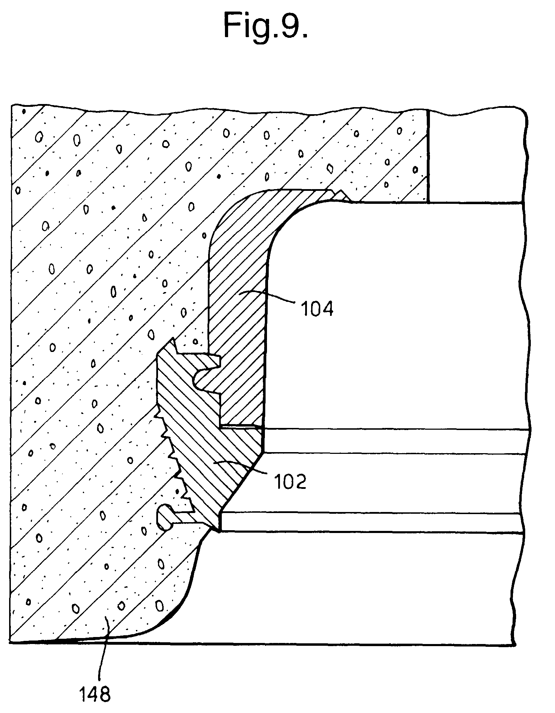

After demoulding the sealing device according to the invention takes a moulded-in position in the socket 148 as shown in Fig. 9.

When connecting the socket with a spigot end this is introduced into the socket 148, the cylindrical outer surface of the socket engaging the sealing projection 110 of the sealing ring and providing a compression of the sealing portion 106. The sealing projection 110 is folded into the socket while pushing aside the adjacent connection portion 126 of the mould ring 104. Also the presence of the groove 122 in the connection portion 108 of the sealing ring 102 contributes to taking up rubber material which is displaced from the sealing portion 106 as a consequence of the compression of the sealing portion in the space formed by the cylindrical surfaces of the socket and the spigot end.

When building up a pressure in the pipe line in which the socket with the sealing device according to the invention is included, the pressure will provide a sealing lip action on the sealing projection 110 by the fact that the liquid pressure forces away the relatively weak and resilient material of the mould ring 104.

The design of the connection between the mould ring 104 and the sealing ring 102 according to the invention provides a secure and efficient positioning of the mould ring and the sealing ring in relation to each other during the moulding-in operation of the sealing device, during the pipe jointing operation and during the following activity for maintaining the tightness of the pipe joint. Also for the rest the design of the connection between the mould ring and the sealing ring contributes to a correct sealing function of the sealing device according to the invention by contributing to a displacement of the rubber material of the sealing ring in a correct way and to the fact that the sealing ring can provide an efficient sealing function by compression as well as by lip action.

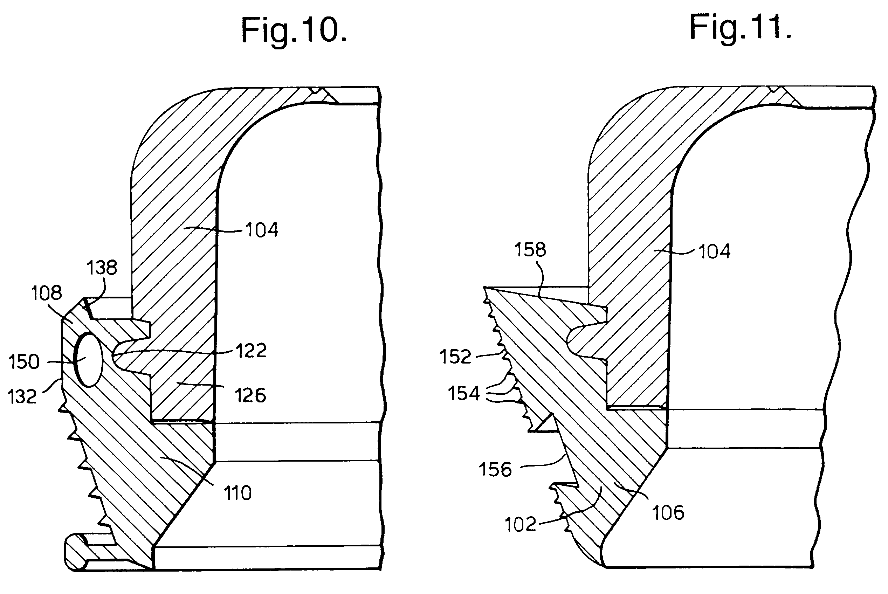

The embodiment of the sealing device according to the invention shown in Fig. 10 differs from the sealing device according to Figs. 8 and 9 only in the respect that the sealing device according to Fig. 10 has in its connection portion 108 between the groove 122 and the cylindrical surface portion 132 an annular, closed space 150. The space 150 improves the lip function of the sealing projection 110 by facilitating the radially outwardly directed compression of the connection portion 126 and 108. Thereby, the sealing projection 110 is more easy available to be influenced by an increased inner pressure in the pipe line in which the sealing device is positioned.

The embodiment of the sealing device according to the invention shown in Fig. 11 differs from the embodiments according to Figs. 8, 9 and 10 mainly with regard to the design of the radially outer portion of the sealing ring 102. Thus, the sealing ring 102 according to Fig. 11 has a continuous, conical radially outer surface 152 which also this is provided with peripheral webs 154 for the same purpose as the webs 144 in the embodiment of Figs. 8, 9 and 10. At the conical surface 152 there is in the sealing portion 106 positioned an annular, dovetail shaped groove 156 into which concrete is introduced when the sealing device is moulded into the concrete pipe socket and consequently constitutes another embodiment of means for binding the sealing device to the socket. Thus, the groove 156 can be considered to replace the projection 136 in the embodiment according to Figs. 8, 9 and 10.

The projection 138 in the embodiment according to Figs. 8, 9 and 10 is in the embodiment according to Fig. 11 replaced by a conical design of the end surface 158 of the sealing ring 102 preventing radial withdrawal of the sealing device from the socket, when the sealing device has been moulded into the concrete pipe socket.

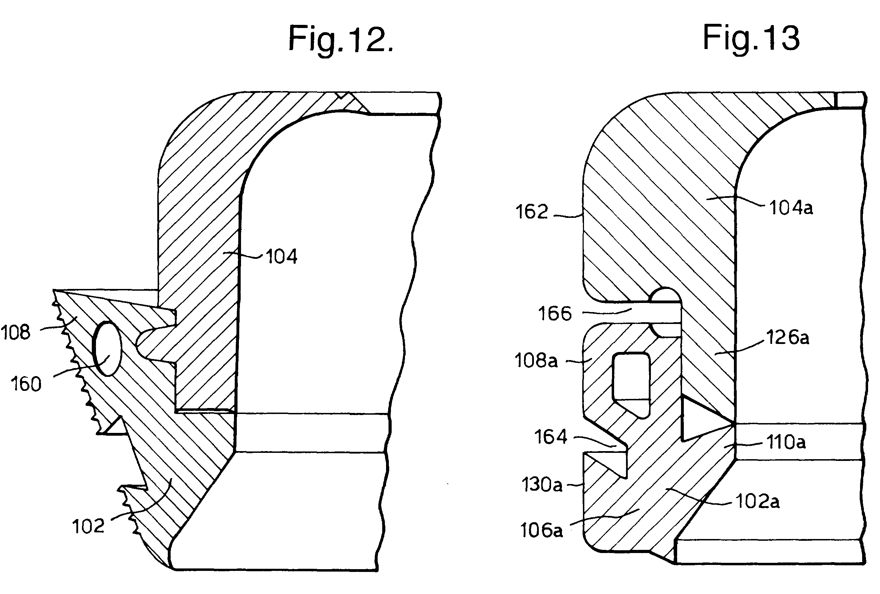

The embodiment of the sealing device according to the invention as shown in Fig. 12 differs from the embodiment according to Fig. 11 by the fact that the connection portion 108 is like the embodiment according to Fig. 10 provided with an annular, closed space 160 having the same function as the space 150 in the embodiment according to Fig. 10.

The embodiment of the sealing ring according to the invention shown in Fig. 13 consists of a sealing ring 102a and a mould ring 104a. The sealing ring 102a has a sealing portion 106a having a connection portion 108a and a sealing projection 110a.

The mould ring 104a has a connection portion 126a which along a cylindrical connection surface contacts the connection portion 108a of the sealing ring 102a. The end surfaces 116a and 128a of the sealing projection 110a and the connection portion 126a of the mould ring, respectively, engage each other at the radially inner surface of the sealing device and are conical in such a way that the space between said end surfaces widens relatively much in the radial direction outwardly.

The radially outer surface of the sealing device forms a substantially cylindrical surface in which the radially outer surface 130a of the sealing ring 102a as well as the radially outer surface 162 of the mould ring 104a are positioned.

Grooves 164 and 166 are formed at the radially outer surface of the sealing device. Concrete can penetrate into these grooves when moulding the sealing device into the concrete socket in order to improve the fastening of the sealing device to the socket. The groove 164 is formed in the sealing ring 102a between the sealing portion 106a and the connection portion 108a thereof while the groove 166 is formed between two opposite surfaces of the sealing ring 102a and the mould ring 104a.

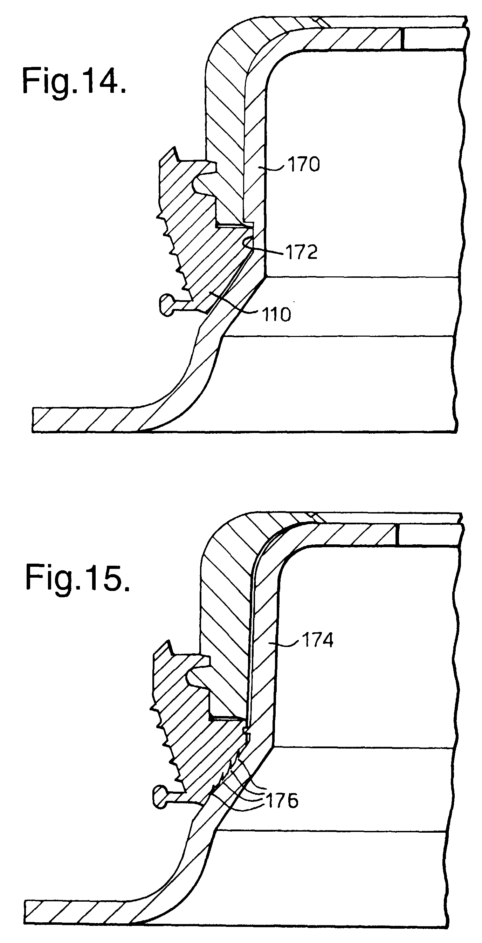

Figs. 14, 15, 16 and 17 illustrate different embodiments of sealing devices and mould rings according to the invention for improving the positioning and fixing of the sealing device in relation to a base ring.

In accordance with Fig. 14 the base ring 170 is formed with an annular groove 172 in which the inner end of the sealing projection 110 of the sealing device is positioned. This provides for an exact positioning of the sealing device on the base ring 170 as same time as the correct position of the sealing device during the mould-in operation is secured in a satisfactory manner.

In accordance with Fig. 15 the base ring 174 is formed with teeth 176 which by engagement with the conical surface 112 of the sealing projection 110 of the sealing device fix a sealing device against sliding in the vertical direction.

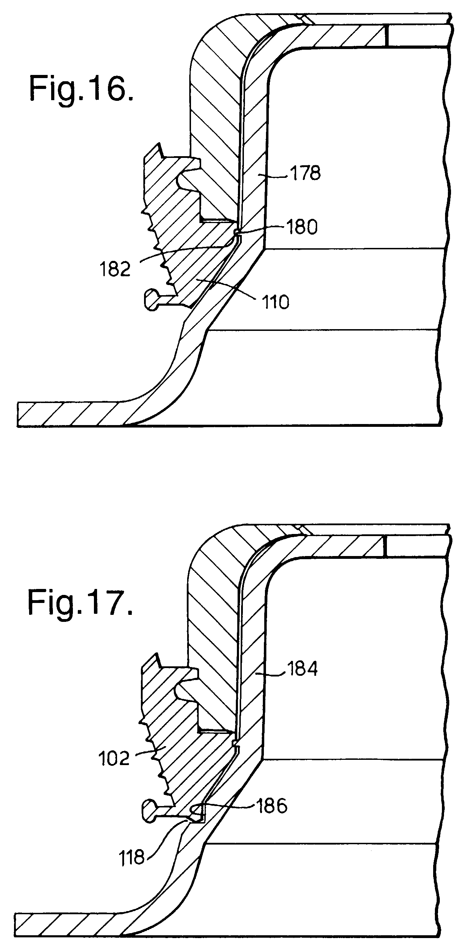

In the embodiment according to Fig. 16 the base ring 178 is formed with an annular projection 180 matching a complementary groove 182 in the sealing projection 110 of the sealing device.

In the embodiment of the base ring 184 shown in Fig. 17 the base ring is formed with an annular groove 186 in which the projection 118 of the sealing ring 102 engages so as to fix the position of the sealing device in relation to the base ring.

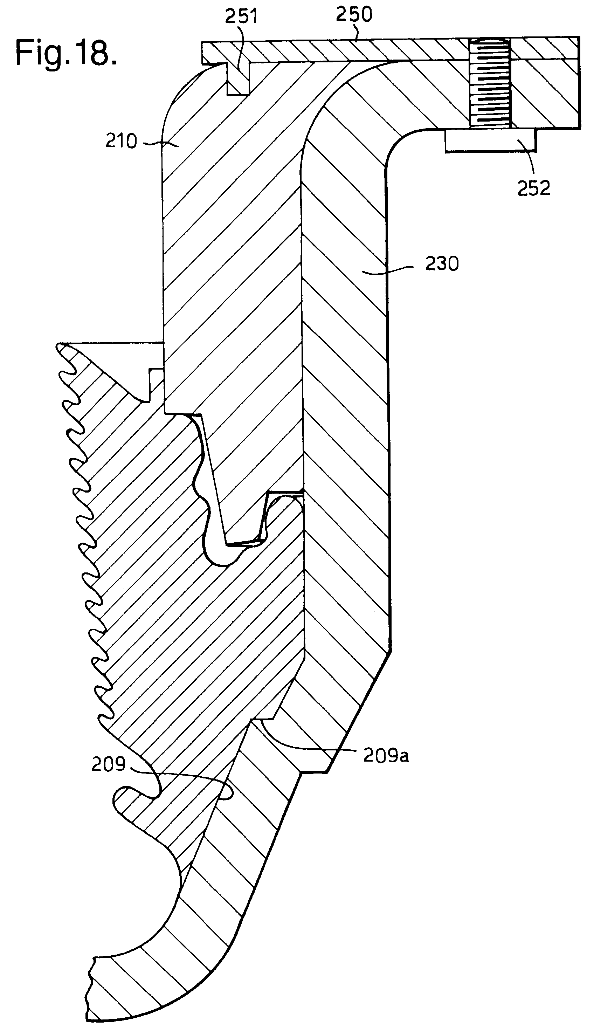

Fig. 18 shows a further embodiment of the sealing device supported on a base ring 230. The inclined surface 209 of the base ring has a portion 209a extending in substantially radial direction so that there is provided a shoulder defining the axial position of the sealing device in the pipe which shall be manufactured. The surface 209, 209a so formed prevent the sealing device from sliding even when great vibrational forces are involved, as required when the concrete pipes have thick walls.

When using such great vibrational forces also the mould ring 210 should be separately fixed. For this purpose three ring segments 250 are positioned in the area of the bottom surface of the socket which segments engage a groove in the mould ring 210 by means of a bead 251 and fix the mould ring to the base ring 230. The ring segments 250 can be releasably connected with the base ring 230 by means of bolts 252, but it is possible also to consider other rapidly releasably couplings for securely retaining the ring segments 250 to the base ring during the manufacturing of the concrete pipe and for subsequent releasing of the connection. Instead of three ring segments 250 it is possible also to use a deformable plate or an element of the disposable type.

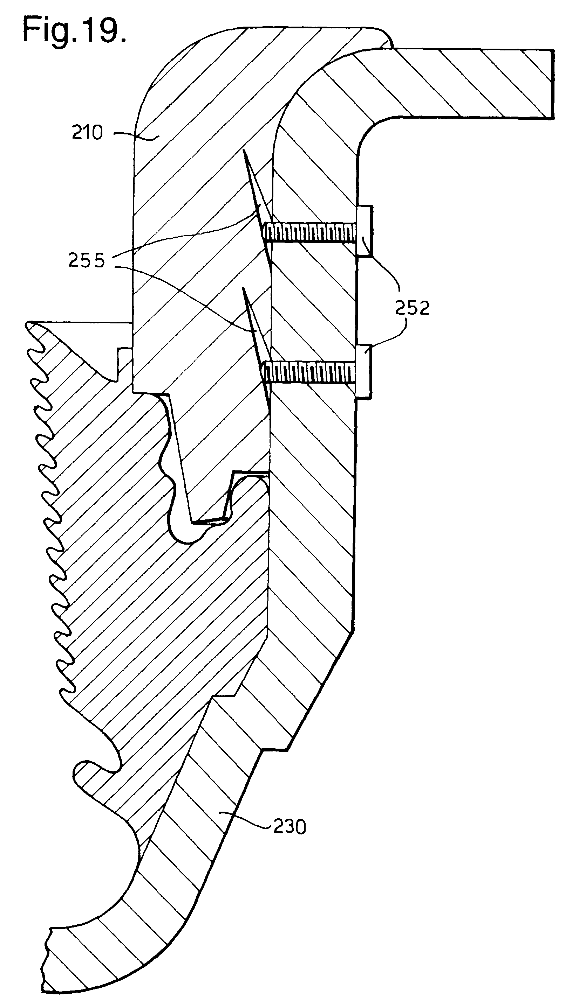

Fig. 19 shows a further embodiment of the releasable fastening means for the mould ring 210 and in accordance therewith these consist of stable rings or retainer elements 255 of for example steel distributed around the periphery and engaging obliquely extending clamping slots in the mould ring 210. The rings or the retainer elements 255 have a wedge-shaped cross section and present a sharp edge so that they can be forced into the cellular material of the mould ring 210 for forming the clamping slots. Also here there are bolts 252 or other releasable retainer means for temporarily retaining the rings or the retainer elements 255.

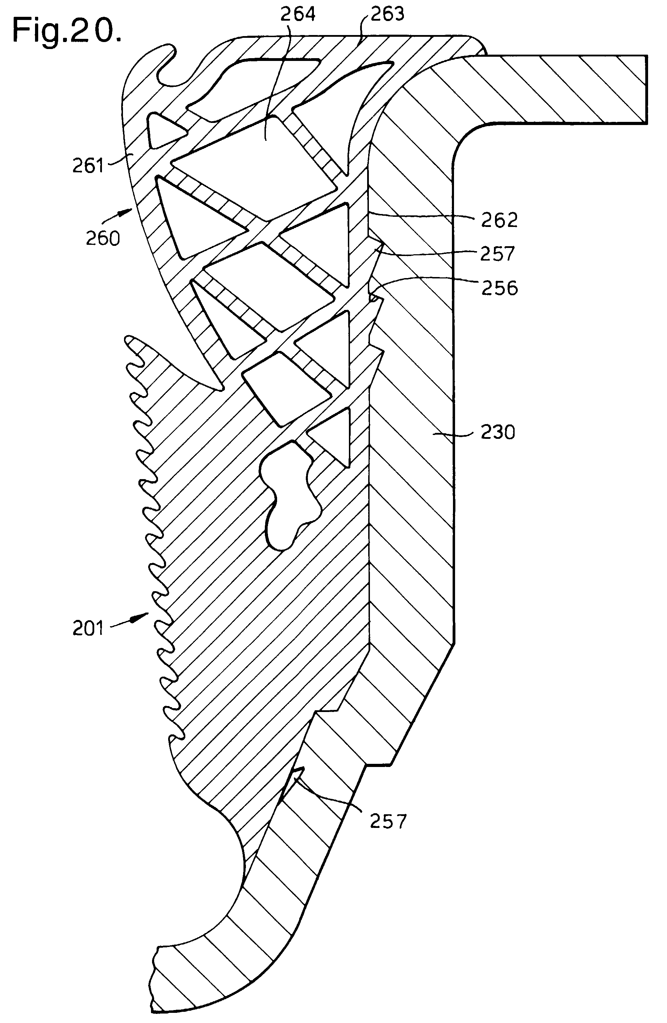

As shown in Fig. 20 the base ring 230 can be provided with grooves 256 and the mould ring 260 and the sealing ring 201, respectively, can be provided with complementary projections 257 for preventing undesired releasing of the mould ring from the base ring. It is possible also to position the projections 257 on the base ring and the grooves 256 on the mould ring 260 and the sealing ring 201, respectively. The engagement between the grooves 256 and the projections 257 is chosen so that the base ring 230 can by means of a predetermined force be withdrawn from the seal. Fig. 20 also shows a projecting collar 260 firmly connected with the sealing ring 201 and constituting a mould ring having an outer wall 261, an inner wall 262 and a rear, radial wall 263. Between these walls 261, 262, 263 there is arranged a support layer 264 which can be formed as a network of beams extending obliquely in relation to the walls and in relation to each other and providing the mould ring 260 with sufficient stability when the concrete pipe is being manufactured. As appears, the outer surface 261 can be inclined so that the mould ring is thicker at its upper portion for resisting the pressure established when the concrete pipe is manufactured and to be sufficient resilient at its central portion for offering movement space for the spigot end.

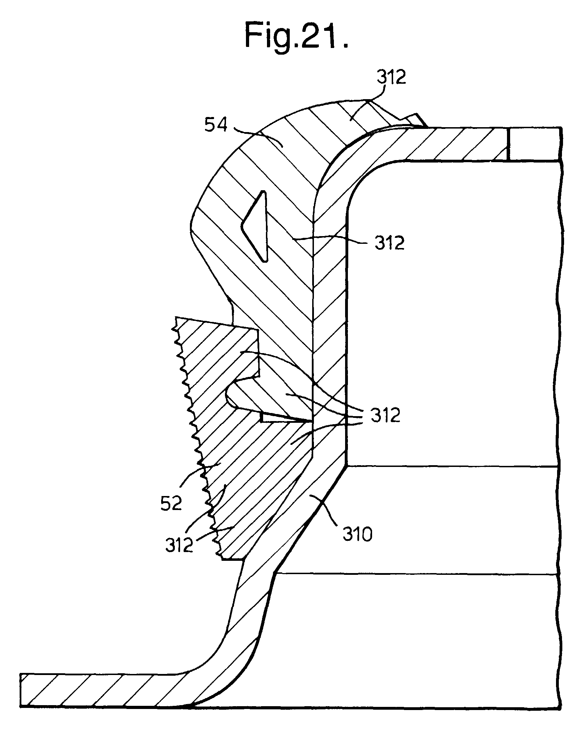

In Fig. 21 there is shown a section corresponding to Fig. 6 of the sealing device according to the invention wherein the sealing device is positioned on a base ring 310. For securely retaining the sealing device on the base ring during the moulding of the sealing device into the socket of the concrete pipe the sealing device is provided with a thread reinforcement. The thread reinforcement has the form of one or several threads 312 extending around the seal. The thread reinforcement can be positioned at one or more of the places shown in Fig. 21 of the sealing ring 52 and/or the mould ring 54 of the sealing device or at any other desired and suitable point of the sealing device. By means of the thread reinforcement shown in Fig. 21 there is provided a secure fastening of the sealing device to the base ring during the moulding operation without the requirement that the base ring shall be designed in any special way.

The invention can be modified within the scope of the following claims. This is true especially in respect of the connection between the sealing ring and the mould ring of the sealing device, whereby it is possible according to one's wishes to let the sealing ring and the mould ring consist of connected or separate portions in all of the embodiments shown in the drawings.

## Claims

1. A sealing device for sealing an annular space between two pipe end portions preferably consisting of concrete, one of the pipe end portions forming a socket (20; 148) having a substantially cylindrical inner surface and the other pipe end portion forming a spigot end having a substantially cylindrical outer surface and being introducable into the socket, the sealing device comprising a sealing ring (1; 52; 102) consisting of an elastic material, preferably rubber, having a sealing portion (2; 56; 106; 110) for sealing the annular space, the sealing portion comprising a radially inwardly directed sealing projection, the sealing device being adapted to be moulded into the socket at the cylindrical inner surface thereof and having means (6) for anchoring the sealing device in the moulded-in position in the socket, and further comprising a mould ring (10; 54; 104; 210; 260) connected with the sealing ring (1; 52; 102) and adapted to be moulded into the socket together with the sealing ring with the sealing ring positioned adjacent the free end of the socket and the mould ring positioned at a greater distance from the free end of the socket than the sealing ring, the mould ring (10; 54; 104; 210; 260) being at least in connection with the sealing portion (2; 56; 106; 110) of the sealing ring (1; 52; 102) easily compressible so as to take up the sealing deformation of the sealing portion when the spigot end is introduced into the socket, and the sealing projection having a surface facing an end surface of a connection portion of the mould ring, **characterized** in that the mould ring (10; 54; 104; 210; 260) has at least in connection with the sealing ring (1; 52; 102) its radially outer surface positioned in substantially the same axial plane as the base of the sealing projection, that the sealing projection is of substantially the same radial extension as the opposite end surface of the mould ring and that the sealing ring with the exception of the sealing projection is depressed and enclosed in the socket (20; 148) after the sealing device has been moulded into the socket.

2. A sealing device as claimed in claim 1, **characterized** in that the sealing ring and the mould ring are connected with each other by means of two concentric annular connection portions (3; 58; 77; 108; 126) engaging each other, one of the connection portions being formed at the inner edge of the sealing ring and the other being formed at the outer edge of the mould ring.

3. A sealing device as claimed in claim 1 or 2, **characterized** in that the mould ring (10; 54; 104; 210) consists of cellular rubber.

4. A sealing device as claimed in any of claims 1 - 3, **characterized** in that the mould ring (10; 54; 104; 210) consists of cellular plastic of elastic type, for example polyurethane or polyester.

5. A sealing device as claimed in any of claims 2-4, **characterized** in that the end surface of the connection portion of the mould ring (10; 54; 104) and the opposite surface of the sealing projection (2; 56; 110) engage each other at the radially inner surface of the sealing device and for the rest forms a gap (8).

6. A sealing device as claimed in claim 5, **characterized** in that the gap (18) widens radially outwards.

7. A sealing device as claimed in claim 2, **characterized** in that the connection portions (108; 126) engage each other by means of surfaces (122; 124) adapted to prevent axial displacement of the sealing ring (102) and the mould ring (104) in relation to each other.

8. A sealing device as claimed in claim 7, **characterized** in that the connection portion (126) of the mould ring (104) is formed with a radially outwardly directed, annular projection (124) engaging a complementary groove (122) in the connection portion (108) of the sealing ring (102).

9. A sealing device as claimed in any of the preceding claims, **characterized** in that the radially outer surface (5) of the sealing ring (1) widens conically from the end of the sealing ring which is closest to the free end of the socket when the sealing device has been moulded into the socket.

10. A sealing device as claimed in any of the preceding claims, **characterized** in that the sealing ring is at its radially outer portion (6, 7; 84) adapted to be moulded into the socket formed so as to improve the binding to the socket.

11. A sealing device as claimed in claim 10, **characterized** in that the sealing ring (102) has a radially outwardly directed, annular retainer portion (136) at the end which is closest to the free end of the socket when the sealing device has been moulded into the socket.

12. A sealing device as claimed in claim 10 or 11, **characterized** in that the sealing ring (5; 102) is at its radially outer surface formed with an annular groove (42; 156; 164) having at least one surface inclined in relation to the radial direction.

13. A sealing device as claimed in claim 12, **characterized** in that the groove (156) is undercut and is preferably dovetail-shaped.

14. A sealing device as claimed in any of claims 10 - 13, **characterized** in that the sealing ring has an axially and/or radially directed annular retainer portion (138) at the end which is positioned at the largest distance from the free end of the socket when the sealing device has been moulded into the socket.

15. A sealing device as claimed in claim 14, **characterized** in that the sealing ring has at its axially inner end surface an axially directed, annular projection (138) acting as a retainer portion.

16. A sealing device as claimed in any of claims 10 - 15, **characterized** in that the sealing device has at the end which is positioned at the largest distance from the free end of the socket when the sealing ring has been moulded into the socket an end surface (6) inclined to the radial direction and partly covering the mould ring (10), the end surface being adapted to prevent radial displacement of the sealing device from the socket.

17. A sealing device as claimed in any of the preceding claims, **characterized** in that the sealing ring is at its radially outer surface formed with several projections (40; 144; 154).

18. A sealing device as claimed in claim 17, **characterized** in that the projections (40; 144; 154) are constituted by annular beads.

19. A sealing device as claimed in any of the preceding claims, which is adapted to be moulded into a socket by being positioned on a base ring and by moulding the socket around the base ring (170; 174; 178; 184; 230) and the sealing device positioned thereon, **characterized** in that the sealing device is provided with means for releasably fixing the sealing device to the base ring.

20. A sealing device as claimed in claim 19, **characterized** in that the fixing means comprises one or several projections (110) adapted to cooperate with grooves (172) in the base ring.

21. A sealing device as claimed in claim 19 or 20, **characterized** in that the fixing means comprises one or several grooves (182) adapted to cooperate with projections (180) on the base ring.

22. A sealing device as claimed in any of claims 19 - 21, **characterized** in that a sealing strip (43) is arranged in the area of the intended passage of the sealing device through the inner surface of the concrete socket, the sealing strip preventing penetration of concrete sludge between the sealing device and the base ring when the sealing device is being moulded into the socket.

23. A sealing device as claimed in any of the preceding claims, **characterized** in that the mould ring (10; 54; 104; 210; 260) extends to the radial bottom surface of the socket and partly covers this surface.

24. A sealing device as claimed in claim 23, **characterized** in that the mould ring has a support layer (264) towards the interior of the socket.

25. A sealing device as claimed in claim 24, **characterized** in that the support layer (264) is constituted by radially or obliquely directed bracings.

26. A sealing device as claimed in claim 24 or 25, **characterized** in that the support layer (264) has a boundary layer towards the interior of the socket.

27. A sealing device as claimed in any of claims 24 - 26, **characterized** in that the resiliencies of the sealing ring (1; 52; 102), the support layer and the boundary layer are different because of different material thicknesses and/or material types.

28. A sealing device as claimed in claim 27, **characterized** in that the resiliency is highest in the transition area between the sealing ring and the mould ring.

29. A sealing device as claimed in any of the preceding claims, **characterized** in that the materials of the different parts of the sealing device have different Shore hardnesses.

30. A sealing device as claimed in any of the preceding claims, **characterized** in that spaces of different sizes for providing different resiliencies are positioned in different parts of the sealing device.

31. A sealing device as claimed in any of the preceding claims, **characterized** in that the mould ring (54) has a radially projecting portion (98) which is of substantially the same outer diameter as the outer diameter of the end of the sealing ring which is positioned at the largest distance from the free end of the socket when the sealing ring has been moulded into the socket.

32. A sealing device as claimed in claim 31, **characterized** in that the mould ring (54) has a curved outer side.

33. A sealing device as claimed in any of the preceding claims, **characterized** in that the radially outer surface of the sealing ring and/or the mould ring are provided with projections and grooves.

34. A pipe having a socket with a substantially cylindrical inner surface, **characterized** in that a sealing device according to any of claims 1 - 33 is positioned at the cylindrical inner surface of the socket.

## Patentansprüche

1. Dichtvorrichtung zum Abdichten eines ringförmigen Raumes zwischen zwei Rohrendteilen, die vorzugsweise aus Beton bestehen, wobei eines der Rohrendteile eine Muffe (20; 148) bildet mit einer im wesentlichen zylindrischen inneren Oberfläche und das andere Rohrendteil ein Zapfenende bildet mit einer im wesentlichen zylindrischen äußeren Oberfläche, wobei das Zapfenende in die Muffe einführbar ist, die Dichtvorrichtung einen Dichtring (1; 52; 102) aufweist, der aus einem elastischen Material besteht, vorzugsweise Kautschuk, mit einem Abdichtteil (2; 56; 106; 110) zum Abdichten des Ringraumes, der Abdichtteil einen radial einwärts gerichteten Abdichtvorsprung aufweist, die Dichtvorrichtung geeignet ist, in die Muffe an deren zylindrische innere Oberfläche geformt zu werden, wobei die Dichtvorrichtung Mittel (6) hat zum Verankern der Dichtvorrichtung in der eingeformten Position in der Muffe, ferner ein Formring (10; 54; 104; 210; 260) vorgesehen ist, der mit dem Dichtring (1, 52; 102) verbunden und geeignet ausgestaltet ist, zusammen mit dem Dichtring in die Muffe eingeformt zu werden, wobei der Dichtring neben dem freien Ende der Muffe angeordnet ist und der Formring in einem größeren Abstand von dem freien Ende der Muffe angeordnet ist als der Dichtring, der Formring (10; 54; 104; 210; 260) mindestens in Verbindung mit dem Abdichtteil (2; 56; 106; 110) des Dichtringes (1; 52; 102) leicht zusammendrückbar ist, um die Abdichtdeformation des Abdichtteiles aufzunehmen, wenn das Zapfenende in die Muffe eingeführt wird, und wobei der Dichtvorsprung eine Oberfläche hat, die einer Endoberfläche eines Verbindungsteils des Formringes zugewandt ist, **dadurch gekennzeichnet, daß** der Formring (10; 54; 104; 210; 260) mindestens in Verbindung mit dem Dichtring (1; 52; 102) seine radial äußere Oberfläche in im wesentlichen derselben axialen Ebene angeordnet hat wie die Basis des Abdichtvorsprunges, welcher im wesentlichen dieselbe radiale Erstreckung hat wie die gegenüberliegende Endoberfläche des Formringes, und daß der Dichtring mit Ausnahme des Abdichtvorsprunges niedergedrückt und in der Muffe (20; 148) eingeschlossen ist, nachdem die Dichtvorrichtung in die Muffe geformt wurde.

2. Dichtvorrichtung nach Anspruch 1, **dadurch gekennzeichnet, daß** der Dichtring und der Formring mittels zweier konzentrischer, ringförmiger Verbindungsteile (3; 58; 77; 108; 126), die miteinander in Eingriff treten, miteinander verbunden sind, wobei eines der Verbindungsteile an der inneren Kante des Dichtringes und das andere an der äußeren Kante des Formringes gebildet sind.

3. Dichtvorrichtung nach Anspruch 1 oder 2, **dadurch gekennzeichnet, daß** der Formring (10; 54; 104; 210) aus zellenförmigem Kautschuk besteht.

4. Dichtvorrichtung nach einem der Ansprüche 1 bis 3, **dadurch gekennzeichnet, daß** der Formring (10; 54; 104; 210) aus zellenförmigem Kunststoff von elastischem Typ besteht, zum Beispiel Polyurethan oder Polyester.

5. Dichtvorrichtung nach einem der Ansprüche 2 bis 4, **dadurch gekennzeichnet, daß** die Endoberfläche des Verbindungsteiles des Formringes (10; 54; 104) und die gegenüberliegende Oberfläche des Abdichtvorsprunges (2; 56; 110) an der radial inneren Oberfläche der Dichtvorrichtung miteinander in Eingriff treten und für den Rest eine Lücke (8) bilden.

6. Dichtvorrichtung nach Anspruch 5, **dadurch gekennzeichnet, daß** die Lücke (18) sich radial nach außen erweitert.

7. Dichtvorrichtung nach Anspruch 2, **dadurch gekennzeichnet, daß** die Verbindungsteile (108; 126) mittels Oberflächen (122; 124) miteinander in Eingriff treten, die geeignet sind, die axiale Verschiebung des Dichtringes (102) und des Formringes (104) bezüglich einander zu verhindern.

8. Dichtvorrichtung nach Anspruch 7, **dadurch gekennzeichnet, daß** das Verbindungsteil (126) des Formringes (104) mit einem radial nach außen gerichteten, ringförmigen Vorsprung (124) gebildet ist, der mit einer komplementären Nut (122) in dem Verbindungsteil (108) des Dichtringes (102) in Eingriff tritt.

9. Dichtvorrichtung nach einem der vorhergehenden Ansprüche, **dadurch gekennzeichnet, daß** die radial äußere Oberfläche (5) des Dichtringes (1) sich konisch von demjenigen Ende des Dichtringes erweitert, welche dem freien Ende der Muffe am nächsten ist, wenn die Dichtvorrichtung in die Muffe geformt wurde.

10. Dichtvorrichtung nach einem der vorhergehenden Ansprüche, **dadurch gekennzeichnet, daß** der Dichtring an seinem radial äußeren Teil (6, 7; 84) geeignet ausgestaltet ist, um in die Muffe geformt zu werden, die so geformt ist, daß die Bindung an die Muffe verbessert wird.

11. Dichtvorrichtung nach Anspruch 10, **dadurch gekennzeichnet, daß** der Dichtring (102) ein radial nach außen gerichtetes, ringförmiges Rückhalteteil (136) an dem Ende hat, welches dem freien Ende der Muffe am nächsten liegt, wenn die Dichtvorrichtung in die Muffe eingeformt worden ist.

12. Dichtvorrichtung nach Anspruch 10 oder 11, **dadurch gekennzeichnet, daß** der Dichtring (5; 102) an seiner radial äußeren Oberfläche mit einer ringförmigen Nut (42; 156; 164) gebildet ist mit mindestens einer bezüglich der radialen Richtung geneigten Oberfläche.

13. Dichtvorrichtung nach Anspruch 12, **dadurch gekennzeichnet, daß** die Nut (156) hinterschnitten ist und vorzugsweise schwalbenschwanzförmig ist.

14. Dichtvorrichtung nach einem der Ansprüche 10 bis 13, **dadurch gekennzeichnet, daß** der Dichtring ein axial und/oder radial gerichtetes ringförmiges Rückhalteteil (138) an dem Ende hat, welches im größten Abstand von dem freien Ende der Muffe angeordnet ist, wenn die Dichtvorrichtung in die Muffe eingeformt worden ist.

15. Dichtvorrichtung nach Anspruch 14, **dadurch gekennzeichnet, daß** der Dichtring an seiner axialen inneren Endoberfläche einen axial gerichteten, ringförmigen Vorsprung (138) hat, der als ein Rückhalteteil arbeitet.

16. Dichtvorrichtung nach einem der Ansprüche 10 bis 15, **dadurch gekennzeichnet, daß** die Dichtvorrichtung an dem Ende, welches im größten Abstand von dem freien Ende der Muffe angeordnet ist, wenn der Dichtring in die Muffe eingeformt worden ist, eine Endoberfläche (6) hat, die zu der radialen Richtung geneigt ist und teilweise den Formring (10) abdeckt, wobei die Endoberfläche geeignet ausgestaltet ist, eine radiale Verschiebung der Dichtvorrichtung aus der Muffe zu verhindern.

17. Dichtvorrichtung nach einem der vorhergehenden Ansprüche, **dadurch gekennzeichnet, daß** der Dichtring an seiner radial äußeren Oberfläche mit einigen Vorsprüngen (40; 144; 154) gebildet ist.

18. Dichtvorrichtung nach Anspruch 17, **dadurch gekennzeichnet, daß** die Vorsprünge (40; 144; 154) durch ringförmige Wulste gebildet sind.

19. Dichtvorrichtung nach einem der vorhergehenden Ansprüche, die geeignet ist, dadurch in eine Muffe geformt zu werden, daß sie auf einem Basisring angeordnet wird und daß die Muffe um den Basisring (170; 174; 178; 184; 230) herum geformt wird, wobei die Dichtvorrichtung auf diesem angeordnet wird, **dadurch gekennzeichnet, daß** die Dichtvorrichtung mit Mitteln versehen ist zum lösbaren Fixieren der Dichtvorrichtung an dem Basisring.

20. Dichtvorrichtung nach Anspruch 19, **dadurch gekennzeichnet, daß** das Fixiermittel einen oder mehrere Vorsprünge (110) aufweist, die geeignet sind, mit Nuten (172) in dem Basisring zusammenzuwirken.

21. Dichtvorrichtung nach Anspruch 19 oder 20, **dadurch gekennzeichnet, daß** das Fixiermittel eine oder mehrere Nuten (182) aufweist, die geeignet sind, mit Vorsprüngen (180) auf dem Basisring zusammenzuwirken.

22. Dichtvorrichtung nach einem der Ansprüche 19 bis 21, **dadurch gekennzeichnet, daß** ein Abdichtstreifen (43) im Bereich des beabsichtigten Durchganges der Dichtvorrichtung durch die innere Oberfläche der Betonmuffe angeordnet ist, wobei der Dichtstreifen das Durchtreten von Betonschlamm zwischen der Dichtvorrichtung und dem Basisring verhindert, wenn die Dichtvorrichtung in die Muffe eingeformt wird.

23. Dichtvorrichtung nach einem der vorhergehenden Ansprüche, **dadurch gekennzeichnet, daß** der Formring (10; 54; 104; 210; 260) sich zu der radialen Bodenoberfläche der Muffe erstreckt und diese Oberfläche teilweise abdeckt.

24. Dichtvorrichtung nach Anspruch 23, **dadurch gekennzeichnet, daß** der Formring eine Stützlage (64) zum Inneren der Muffe hin hat.

25. Dichtvorrichtung nach Anspruch 24, **dadurch gekennzeichnet, daß** die Stützlage (264) durch radial oder schräg gerichtete Aussteifungen aufgebaut ist.

26. Dichtvorrichtung nach Anspruch 24 oder 25, **dadurch gekennzeichnet, daß** die Stützlage (264) zum Inneren der Muffe hin eine Grenzschicht hat.

27. Dichtvorrichtung nach einem der Ansprüche 24 bis 16, **dadurch gekennzeichnet, daß** die elastischen Federkräfte bzw. Spannkräfte des Dichtringes (1; 52; 102), der Stützlage und der Grenzlage wegen unterschiedlicher Materialdicken und/oder Materialtypen unterschiedlich sind.

28. Dichtvorrichtung nach Anspruch 27, **dadurch gekennzeichnet, daß** die Elastizität bzw. Spannkraft am höchsten in dem Übergangsbereich ist zwischen dem Dichtring und dem Formring.

29. Dichtvorrichtung nach einem der vorhergehenden Ansprüche, **dadurch gekennzeichnet, daß** die Materialien unterschiedlicher Teile der Dichtvorrichtung unterschiedliche Shorehärten haben.

30. Dichtvorrichtung nach einem der vorhergehenden Ansprüche, **dadurch gekennzeichnet, daß** die Räume unterschiedlicher Größen zur Schaffung unterschiedlicher Spannkräfte in unterschiedlichen Teilen der Dichtvorrichtung angeordnet sind.

31. Dichtvorrichtung nach einem der vorhergehenden Ansprüche, **dadurch gekennzeichnet, daß** der Formring (54) ein radial vorspringendes Teil (98) hat, welches den im wesentlichen selben Außendurchmesser hat wie der Außendurchmesser des Endes des Dichtringes, der im größten Abstand von dem freien Ende der Muffe angeordnet ist, wenn der Dichtring in die Muffe eingeformt worden ist.

32. Dichtvorrichtung nach Anspruch 31, **dadurch gekennzeichnet, daß** der Formring (54) eine gekrümmte äußere Seite hat.

33. Dichtvorrichtung nach einem der vorhergehenden Ansprüche, **dadurch gekennzeichnet, daß** die radial äußere Oberfläche des Dichtringes und/oder des Formringes mit Vorsprüngen und Nuten versehen sind.

34. Rohr mit einer Muffe mit einer im wesentlichen zylindrischen inneren Oberfläche, **dadurch gekennzeichnet, daß** eine Dichtvorrichtung nach einem der Ansprüche 1 bis 33 an der zylindrischen inneren Oberfläche der Muffe angeordnet ist.

## Revendications

1. Dispositif d'étanchéité pour sceller un espace annulaire entre deux parties d'extrémité de tuyaux, de préférence constitués de béton, l'une des parties d'extrémité de tuyau formant un manchon (20; 148) comportant une surface intérieure substantiellement cylindrique et l'autre partie d'extrémité de tuyau formant une extrémité formant bout mâle comportant une surface extérieure substantiellement cylindrique et pouvant être introduite dans le manchon, le dispositif d'étanchéité comprenant une bague d'étanchéité (1; 52; 102) constituée d'un matériau élastique, de préférence du caoutchouc, comportant une partie d'étanchéité (2; 56; 106; 110) pour sceller l'espace annulaire, la partie d'étanchéité comprenant une saillie d'étanchéité dirigée radialement vers l'intérieur, le dispositif d'étanchéité étant conçu pour être moulé dans le manchon au niveau de la surface intérieure cylindrique de ce dernier et comportant un moyen (6) pour ancrer le dispositif d'étanchéité dans la position moulée dans le manchon, et comprenant de plus une bague-moule (10; 54; 104; 210; 260) connectée à la bague d'étanchéité (1; 52; 102) et conçue pour être moulée dans le manchon en même temps que la bague d'étanchéité, avec la bague d'étanchéité positionnée adjacente à l'extrémité libre du manchon et la bague-moule positionnée à une distance plus grande de l'extrémité libre du manchon que la bague d'étanchéité, la bague-moule (10; 54; 104; 210; 260) étant au moins en connexion avec la partie d'étanchéité (2; 56; 106; 110) de la bague d'étanchéité (1; 52; 102) facilement compressible afin de rattraper la déformation de scellement de la partie d'étanchéité quand l'extrémité formant bout mâle est introduite dans le manchon, et la saillie d'étanchéité comportant une surface en vis-à-vis d'une surface d'extrémité d'une partie de connexion de la bague-moule, caractérisé en ce que la surface radialement extérieure de la bague-moule (10; 54; 104; 210; 260) est, au moins en connexion avec la bague d'étanchéité (1; 52; 102), positionnée sensiblement dans le même plan axial que la base de la saillie d'étanchéité, en ce que la saillie d'étanchéité présente sensiblement la même extension radiale que la surface d'extrémité opposée de la bague-moule, et en ce que la bague d'étanchéité, à l'exception de la saillie d'étanchéité, est pressée et enfermée dans le manchon (20; 148) après que le dispositif d'étanchéité a été moulé dans le manchon.

2. Dispositif d'étanchéité selon la revendication 1, caractérisé en ce que la bague d'étanchéité et la bague-moule sont reliées l'une à l'autre grâce à deux parties de connexion annulaires et concentriques (3; 58; 77; 108; 126) coopérant l'une avec l'autre, l'une des parties de connexion étant formée au niveau du bord intérieur de la bague d'étanchéité et l'autre étant formée au niveau du bord extérieur de la bague-moule.

3. Dispositif d'étanchéité selon la revendication 1 ou 2, caractérisé en ce que la bague-moule (10; 54; 104; 210; 260) est constituée de caoutchouc alvéolaire.

4. Dispositif d'étanchéité selon l'une quelconque des revendications 1 à 3, caractérisé en ce que la bague-moule (10; 54; 104; 210; 260) est constituée de plastique alvéolaire de type élastique, par exemple du polyuréthane ou du polyester.

5. Dispositif d'étanchéité selon l'une quelconque des revendications 2 à 4, caractérisé en ce que la surface d'extrémité de la partie de connexion de la bague-moule (10; 54; 104) et la surface opposée de la saillie d'étanchéité (2; 56; 110) coopèrent l'une avec l'autre au niveau de la surface radialement intérieure du dispositif d'étanchéité et pour le reste forment un espace (8).

6. Dispositif d'étanchéité selon la revendication 5, caractérisé en ce que l'espace (18) s'élargit radialement vers l'extérieur.

7. Dispositif d'étanchéité selon la revendication 2, caractérisé en ce que les parties de connexion (108; 126) coopèrent l'une avec l'autre au moyen de surfaces (122; 124) adaptées pour empêcher le déplacement axial de la bague d'étanchéité (102) et de la bague-moule (104) l'une par rapport à l'autre.

8. Dispositif d'étanchéité selon la revendication 7, caractérisé en ce que la partie de connexion (126) de la bague-moule (104) est pourvue d'une saillie annulaire, dirigée radialement vers l'extérieur (124) coopérant avec une gorge complémentaire (122) dans la partie de connexion (108) de la bague d'étanchéité (102).

9. Dispositif d'étanchéité selon l'une quelconque des revendications précédentes, caractérisé en ce que la surface radialement extérieure (5) de la bague d'étanchéité (1) s'élargit de manière conique depuis l'extrémité de la bague d'étanchéité qui est la plus proche de l'extrémité libre du manchon quand le dispositif d'étanchéité a été moulé dans le manchon.

10. Dispositif d'étanchéité selon l'une quelconque des revendications précédentes, caractérisé en ce que la bague d'étanchéité est adaptée, dans sa partie radialement extérieure (6, 7; 84), pour être moulée dans le manchon formé afin d'améliorer la liaison au manchon.

11. Dispositif d'étanchéité selon la revendication 10, caractérisé en ce que la bague d'étanchéité (102) comporte une partie de retenue (136) annulaire et dirigée radialement vers l'extérieur, à l'extrémité qui est la plus proche de l'extrémité libre du manchon quand le dispositif d'étanchéité a été moulé dans le manchon.

12. Dispositif d'étanchéité selon la revendication 10 ou 11, caractérisé en ce que la bague d'étanchéité (5; 102) est pourvue, au niveau de sa surface radialement extérieure, d'une gorge annulaire (42; 156; 164) comportant au moins une surface inclinée par rapport à la direction radiale.

13. Dispositif d'étanchéité selon la revendication 12, caractérisé en ce que la gorge (156) est évidée et est de préférence en queue d'aronde.

14. Dispositif d'étanchéité selon l'une quelconque des revendications 10 à 13, caractérisé en ce que la bague d'étanchéité comporte une partie de retenue (138) annulaire dirigée axialement et/ou radialement à l'extrémité qui est positionnée à la plus grande distance de l'extrémité libre du manchon quand le dispositif d'étanchéité a été moulé dans le manchon.

15. Dispositif d'étanchéité selon la revendication 14, caractérisé en ce que la bague d'étanchéité comporte, au niveau de sa surface d'extrémité axialement intérieure, une saillie annulaire dirigée axialement (138) agissant comme partie de retenue.

16. Dispositif d'étanchéité selon l'une quelconque des revendications 10 à 15, caractérisé en ce que le dispositif d'étanchéité comporte, à l'extrémité qui est positionnée à la plus grande distance de l'extrémité libre du manchon quand la bague d'étanchéité a été moulée dans le manchon, une surface d'extrémité (6) inclinée suivant la direction radiale et recouvrant partiellement la bague-moule (10), la surface d'extrémité étant conçue pour empêcher le déplacement radial du dispositif d'étanchéité du manchon.

17. Dispositif d'étanchéité selon l'une quelconque des revendications précédentes, caractérisé en ce que la bague d'étanchéité est pourvue, au niveau de sa surface radialement extérieure, de plusieurs saillies (40; 144; 154).

18. Dispositif d'étanchéité selon la revendication 17, caractérisé en ce que les saillies (40; 144; 154) sont constituées de talons annulaires.

19. Dispositif d'étanchéité selon l'une quelconque des revendications précédentes, qui est conçu pour être moulé dans un manchon en étant positionné sur une bague de base et en moulant le manchon autour de la bague de base (170; 174; 178; 184; 230) et le dispositif d'étanchéité positionné dessus, caractérisé en ce que le dispositif d'étanchéité est doté d'un moyen pour fixer de manière détachable le dispositif d'étanchéité à la bague de base.

20. Dispositif d'étanchéité selon la revendication 19, caractérisé en ce que le moyen de fixation comprend une ou plusieurs saillies (110) conçues pour coopérer avec des gorges (172) de la bague de base.

21. Dispositif d'étanchéité selon la revendication 19 ou 20, caractérisé en ce que le moyen de fixation comprend une ou plusieurs gorges (182) conçues pour coopérer avec des saillies (180) de la bague de base.

22. Dispositif d'étanchéité selon l'une quelconque des revendications 19 à 21, caractérisé en ce qu'une bande d'étanchéité (43) est agencée dans la zone du passage prévu pour le dispositif d'étanchéité à travers la surface intérieure dû manchon de béton, la bande d'étanchéité empêchant l'introduction de laitance de béton entre le dispositif d'étanchéité et la bague de base pendant le moulage du dispositif d'étanchéité dans le manchon.

23. Dispositif d'étanchéité selon l'une quelconque des revendications précédentes, caractérisé en ce que la bague-moule (10; 54; 104; 210; 260) s'étend jusqu'à la surface radiale inférieure du manchon et couvre partiellement cette surface.

24. Dispositif d'étanchéité selon la revendication 23, caractérisé en ce que la bague-moule comporte une couche de support (264) vers l'intérieur du manchon.

25. Dispositif d'étanchéité selon la revendication 24, caractérisé en ce que la couche de support (264) est constituée d'entretoisements dirigés radialement ou en oblique.

26. Dispositif d'étanchéité selon la revendication 24 ou 25, caractérisé en ce que la couche de support (264) comporte une couche de limite vers l'intérieur du manchon.

27. Dispositif d'étanchéité selon l'une quelconque des revendications 24 à 26, caractérisé en ce que les élasticités de la bague d'étanchéité (1; 52; 102), de la couche de support et de la couche de limite sont différentes à cause de différentes épaisseurs de matériau et/ou types de matériaux.

28. Dispositif d'étanchéité selon la revendication 27, caractérisé en ce que l'élasticité est plus élevée dans la zone de transition entre la bague d'étanchéité et la bague-moule.

29. Dispositif d'étanchéité selon l'une quelconque des revendications précédentes, caractérisé en ce que les matériaux des différentes parties du dispositif d'étanchéité présentent différentes duretés Shore.

30. Dispositif d'étanchéité selon l'une quelconque des revendications précédentes, caractérisé en ce que des espaces de différentes tailles pour apporter des élasticités différentes sont positionnés dans différentes parties du dispositif d'étanchéité.

31. Dispositif d'étanchéité selon l'une quelconque des revendications précédentes, caractérisé en ce que la bague-moule (54) comporte une partie faisant saillie radialement (98) qui présente sensiblement le même diamètre extérieur que celui de l'extrémité de la bague d'étanchéité qui est positionnée à la distance la plus grande de l'extrémité libre du manchon quand la bague d'étanchéité a été moulée dans le manchon.

32. Dispositif d'étanchéité selon la revendication 31, caractérisé en ce que la bague-moule (54) comporte un côté extérieur courbé.

33. Dispositif d'étanchéité selon l'une quelconque des revendications précédentes, caractérisé en ce que la surface radialement extérieure de la bague d'étanchéité et/ou de la bague-moule sont dotées de saillies et de gorges.

34. Tuyau comportant un manchon ayant une surface intérieure sensiblement cylindrique, caractérisé en ce qu'un dispositif d'étanchéité selon l'une quelconque des revendications 1 à 33 est positionné au niveau de la surface intérieure cylindrique du manchon.
